# FASCICULE DE BREVET EUROPEEN

(11) **EP 0 934 194 B1**
(45) Date de publication et mention de la délivrance du brevet: **02.08.2000**
(21) Numéro de dépôt: 97923156.0
(22) Date de dépôt: 07.05.1997
(51) Int. Cl.: B64D 39/00

(54) **PROCEDE ET DISPOSITIF DE GUIDAGE D'UNE PERCHE DE RAVITAILLEMENT EN VOL**
VERFAHREN UND VORRICHTUNG ZUR AUSRICHTUNG EINER LUFTBETANKUNGSSONDE
GUIDING METHOD AND DEVICE FOR IN-FLIGHT-REFUELLING LINE

(30) Priorité: 10.05.1996 FR 9605844
(43) Date de publication de la demande: 11.08.1999
(73) Titulaire: THOMSON-CSF SEXTANT, 78141 Vélizy Villacoublay (FR); INSTITUT NATIONAL POLYTECHNIQUE DE GRENOBLE, F-38031 Grenoble (FR)
(72) Inventeur: VALERY, Philippe, Thomson-CSF S.C.P.I., F-94117 Arcueil Cedex (FR); WASSNER, Hubert, Thomson-CSF S.C.P.I., F-94117 Arcueil Cedex (FR); HORAUD, Patrice, Thomson-CSF S.C.P.I., F-94117 Arcueil Cedex (FR)
(74) Mandataire: Guérin, Michel
(86) Numéro de dépôt international: FR9700823
(87) Numéro de publication internationale: WO9743180

(56) Documents cités:
- WO-A-91/06471
- WO-A-96/09207
- US-A- 4 158 885
- US-A- 4 298 176
- US-A- 4 890 918
- US-A- 5 109 345
- US-A- 5 530 650

## Description

L'invention concerne les systèmes de ravitaillement en vol des avions.

Le ravitaillement en vol consiste à transférer du carburant d'un avion ravitailleur vers un avion ravitaillé à l'aide d'un tuyau qui traverse un bout-dehors (dénomination anglaise courante : "boom") et d'une perche télescopique qui prolonge le bout-dehors. Le bout-dehors est fixé à la partie inférieure arrière du fuselage de l'avion ravitailleur par une liaison semi-rigide lui laissant une certaine liberté de mouvement. L'ensemble du bout-dehors et de la perche flotte sous l'empennage de l'avion ravitailleur grâce à des ailerons équipés de gouvernes qui permettent de le diriger. La longueur totale de l'ensemble du bout-dehors et de la perche déployée peut atteindre 15 ou 20 mètres. L'avion ravitaillé comporte un réceptacle destiné à recevoir l'extrémité de la perche lors du ravitaillement. Ce réceptacle est doté de moyens de verrouillage pour maintenir la perche en relation avec un conduit qui permet de déverser le carburant de l'avion ravitailleur vers un réservoir de l'avion ravitaillé.

Le pilote de l'avion ravitaillé doit approcher son avion sous l'empennage du ravitailleur à proximité de la perche qui s'étend derrière celui-ci, et maintenir sa vitesse rigoureusement égale à celle du ravitailleur jusqu'à la fin de l'opération de ravitaillement.

Deux méthodes existent pour réaliser la jonction entre les réservoirs du ravitailleur et du ravitaillé.

Dans le premier cas, l'avion ravitaillé est équipé d'une perche de ravitaillement en vol qui s'étend dans le champ de vision du pilote, et le tuyau issu du réservoir de carburant du ravitailleur se prolonge au delà du bout-dehors et de la perche par un "panier" destiné à recevoir la perche du ravitaillé. C'est donc le pilote du ravitaillé qui dirige son avion de façon à verrouiller sa perche au fond du panier.

Dans le second cas, auquel l'invention s'intéresse plus précisément, l'avion ravitaillé n'est équipé que d'un réceptacle de ravitaillement, et c'est l'extrémité de la perche du ravitailleur qui vient se loger dans le réceptacle afin de permettre le transfert de carburant. La perche est guidée par un opérateur placé à l'arrière de l'avion ravitailleur Celui-ci regarde à travers un hublot et procède aux opérations d'accouplement des deux avions pour le transfert de carburant. L'opérateur dispose à cet effet de manettes de commande, agissant sur des servo-moteurs de guidage du bout-dehors, pour approcher l'extrémité arrière de l'ensemble bout-dehors/perche jusqu'au réceptacle placé sur l'avion ravitaillé. La position de ce réceptacle est repérée par une marque peinte sur la tôle de l'avion. Lorsque la perche est à la position désirée, en face du réceptacle, l'opérateur déclenche un déploiement supplémentaire de l'extrémité de la perche téléscopique, ce qui engage en position verrouillée la perche dans le réceptacle. Le transfert de carburant peut alors avoir lieu. Le guidage de la perche vers le réceptacle de l'avion ravitaillé est une opération délicate du fait des mouvements relatifs des deux avions et du bout-dehors, et de la grande sensibilité des gouvernes aux altitudes et vitesses usuelles de travail. L'action de l'opérateur sur les commandes du bout-dehors doit être très progressive et le temps nécessaire pour réaliser la jonction entre la perche et le réceptacle peut-être long (quelques minutes) surtout si la masse d'air ambiante est turbulente.

Pour diverses raisons, il peut être souhaitable d'effectuer les opérations sans utiliser un opérateur placé à l'arrière de l'avion ravitailleur.

Un but de l'invention est donc de concevoir un système qui permet de réaliser les opérations d'accouplement sans opérateur placé à l'arrière de l'avion ravitailleur.

Un autre but de l'invention est de diminuer le temps nécessaire pour réaliser l'accouplement de la perche et du réceptacle et d'augmenter ainsi la rotation des ravitaillements.

Une idée serait d'utiliser deux caméras vidéo placées de chaque côté de l'avion. Ces caméras, qui observeraient la scène de ravitaillement sous deux angles différents permettraient de faire de la reconstruction en trois dimensions des objets de la scène. Cela permettrait d'en déduire, dans un repère 3D, les coordonnées du réceptacle et de l'extrémité de la perche.

Mais si cette solution est envisageable pour des applications de robotique en milieu industriel, sa mise en oeuvre sur un avion de ravitaillement en vol, avec les contraintes opérationnelles que cela implique, devient extrêmement complexe et rend ses performances incertaines.

Une des difficultés est d'effectuer l'acquisition et la poursuite de deux objets de l'image ayant des mouvements indépendants qui entraînent des phénomènes de masquage de ces objets. Une autre difficulté provient de l'utilisation de caméras à focale variable. Ce type d'équipement est nécessaire afin de pouvoir garantir que les deux objets soient présents simultanément sur les images, et cela en prenant en compte les éventuelles turbulences, et de permettre une bonne précision dans l'extraction en 3 dimensions de leurs coordonnées notamment lors de la phase finale du guidage de la perche sur le réceptacle.

La mise en oeuvre de deux caméras à focale variable destinées à faire de la reconstruction en 3 dimensions est extrêmement complexe car elle impose une connaissance instantanée et précise de la valeur des focales, et un asservissement des axes optiques des deux caméras en fonction de la valeur des focales; cela impose donc leur installation sur des plate-formes, ce qui, compte-tenu de l'environnement ambiant et des températures imposées par la haute altitude (de l'ordre de -55°C) n'est pas simple.

L'invention vise à proposer une solution plus simple à mettre en oeuvre que cette solution à deux caméras.

On propose selon l'invention un système d'accouplement, notamment pour le ravitaillement en vol, utilisant des moyens de guidage automatique de l'extrémité d'une perche vers un réceptacle d'accouplement en vue de l'accouplement de la perche et de ce réceptacle, la perche étant déployable à partir d'une extrémité d'un bout-dehors orientable, système caractérisé en ce qu'il comporte :
- une caméra portée par l'extrémité du bout-dehors et fournissant une image sous forme de signal électronique,
- des moyens de reconnaissance de forme couplés à la caméra pour reconnaître, dans l'image fournie par la caméra, des éléments caractéristiques liés au réceptacle,
- des moyens de calcul de position pour déterminer, par calcul dans l'image fournie par la caméra, l'écart entre la position des éléments caractéristiques de l'image à un instant donné, et une position de référence issue d'une image mémorisée de la perche et du réceptacle lorsque leur accouplement est réalisé,
- des moyens pour déduire de la taille réelle du réceptacle, de la taille et de la position de sa projection dans l'image, l'écart en profondeur entre l'extrémité de la perche et le réceptacle,
- et des moyens pour commander l'orientation du bout-dehors et le déploiement de la perche en fonction des écarts ainsi mesurés, de manière à rapprocher itérativement la perche du réceptacle jusqu'à l'annulation de ces écarts.

Ainsi, l'idée proposée par l'invention est de placer une caméra sur le bout-dehors, vers l'extrémité arrière de celle-ci, donc suffisamment proche du réceptacle à observer, d'utiliser l'image produite pour faire de la reconnaissance de forme et de l'écartométrie dans le plan de l'image, et d'y rajouter la connaissance préalable de la configuration théorique d'éléments caractéristiques du réceptacle (ou d'une marque peinte associée) pour évaluer l'écart entre la perche et le réceptacle selon l'axe de profondeur.

Le principe de guidage sera ensuite de minimiser itérativement ces écarts, c'est-à-dire de rallier, par un asservissement en vitesse, une image de référence.

Alors qu'il serait naturel d'utiliser des caméras aussi écartées que possible de l'axe de la perche, donc en pratique des caméras montées sur l'avion ravitailleur, pour mieux observer et mesurer l'écart en trois dimensions entre l'extrémité de la perche et le réceptacle, l'invention propose une solution différente utilisant une caméra montée sur le bout-dehors. Cette configuration évite de travailler dans un repère 3D absolu, puisque seuls les mouvements relatifs du réceptacle par rapport au bout-dehors sont observés. Il faut d'ailleurs noter que le positionnement de la caméra sur le bout-dehors fait apparaître dans l'image la perche télescopique. Ce point pourrait être un handicap dans la mesure où la perche risque de masquer, dans certains cas, une partie (voire la totalité) des éléments caractéristiques liés au réceptacle. Il s'avère que cet inconvénient n'est que peu contraignant car la caméra est fixe par rapport au bout-dehors, si bien que la surface de l'image couverte par la perche télescopique est parfaitement prédictible.

L'invention propose de fixer la ou les caméras sur le bout-dehors, proche de son extrémité, c'est-à-dire solidairement à l'extrémité du mécanisme de guidage. Les avantages sont multiples; on peut citer le positionnement de la caméra dans une zone proche de la cible à atteindre, le mouvement convergent du bout-dehors vers le réceptacle au cours de la phase de ravitaillement, ce qui limite les risques de sortie du champ de la caméra et ce qui limite également le nombre d'objets présents sur les images. On pourra alors exécuter le guidage de la caméra avec une focale fixe, ce qui simplifie particulièrement la mise en oeuvre de la méthode retenue.

Le système sera mis en oeuvre avec un calculateur suffisamment puissant pour faire de la reconnaissance de forme et de la poursuite à partir d'un traitement d'image numérique. Ce calculateur embarqué dans l'avion de ravitaillement utilisera une base de données dans laquelle seront mémorisés les éléments caractéristiques des différents réceptacles et peintures de marquage qui équipent les avions susceptibles d'être ravitaillés. Le guidage par ce système d'imagerie dépend en effet d'un processus de reconnaissance d'éléments caractéristiques liés au réceptacle. Il est souhaitable que le système automatique s'adapte aux marques déjà existantes ou puisse être utilisé pour des avions portant des marquages ou des réceptacles différents.

D'autres caractéristiques et avantages de l'invention apparaîtront à la lecture de la description détaillée qui suit et qui est faite en référence aux dessins annexés dans lesquels :
- la figure 1 représente une vue globale d'un avion ravitailleur accouplé à un avion ravitaillé;
- la figure 2 représente plus en détail une vue latérale de la queue de l'avion ravitailleur avec son bout-dehors arrière orientable;
- la figure 3 représente une vue de dessus correspondant à la figure 2;
- la figure 4 représente une vue en coupe schématique du réceptacle placé sur l'avion ravitaillé, apte à recevoir l'extrémité de la perche de l'avion ravitailleur;
- la figure 5 représente une vue de dessus du réceptacle et de la marque peinte caractéristique qui permet de repérer sa position exacte;
- la figure 6 représente schématiquement le montage de la caméra sur le bout-dehors;
- la figure 7 représente schématiquement une image fournie par la caméra lors de l'approche en vue d'un accouplement automatique;
- la figure 8 représente l'image finale obtenue par la caméra lorsque la perche est en position prête pour l'accouplement;
- la figure 9 représente un schéma global du système de guidage selon l'invention.

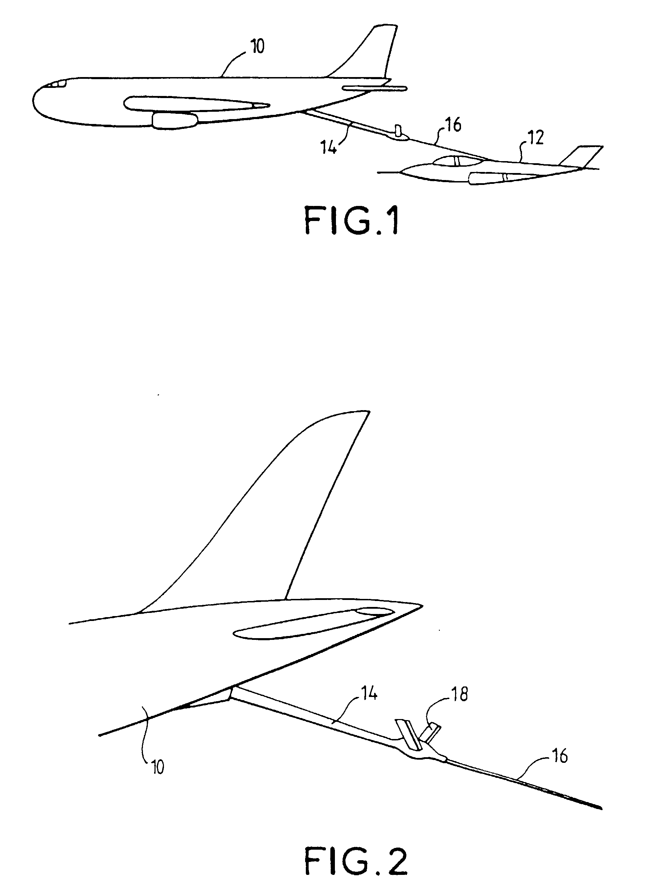

Sur la figure 1, on a représenté schématiquement un avion ravitailleur 10 et un avion ravitaillé en vol 12. Le système de ravitaillement en vol est composé d'un bout-dehors 14 prolongé par une perche télescopique 16. Il s'étend sous la partie arrière du fuselage de l'avion ravitailleur. Le bout-dehors 14 est rigide et orientable par rapport à l'axe longitudinal de l'avion, tout en restant globalement dirigé vers l'arrière et vers le bas. Par rapport à l'axe longitudinal de l'avion, il peut par exemple s'incliner vers le bas dans un secteur angulaire s'étendant de 20° jusqu'à 40°, et latéralement de 0° à 10° ou 15° de part et d'autre de l'axe. Il peut avoir une longueur de 5 à 10 mètres par exemple et il se prolonge par une perche téléscopique 16 qui peut s'étendre sur une longueur de quelques mètres. Par exemple, la longueur totale du bout-dehors et de la perche peut varier entre 15 et 20 mètres. La fixation du bout-dehors à l'arrière de l'avion est une fixation semi-rigide par une rotule, et l'orientation du bout-dehors par rapport à l'axe se fait par le moyen d'ailerons mobiles contrôlés par des servo-moteurs; la commande des servo-moteurs se fait à partir de l'avion ravitailleur.

Dans l'exemple décrit, le bout-dehors est guidé par des ailerons disposés en V, mais une autre disposition de ces ailerons (en T par exemple) est envisageable. Le guidage du bout-dehors reprend donc le principe de fonctionnement bien connu d'un empennage d'avion disposant d'une architecture équivalente. Le principe de l'invention est indépendant de la manière dont est réalisé le guidage.

L'allongement télescopique de la perche est également contrôlé à partir de l'avion et peut éventuellement être mesuré par un télémètre intégré à la perche télescopique.

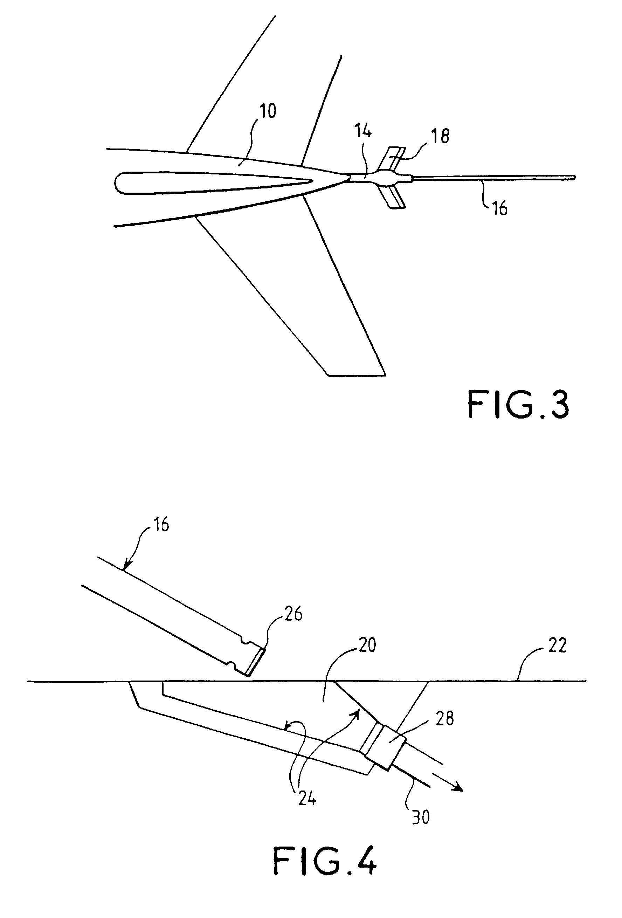

Les figures 2 et 3 représentent plus en détail une vue du bout-dehors 14 avec sa perche télescopique 16 et ses ailerons 18. Les ailerons sont par exemple deux ailerons disposés en V et comprenant des parties mobiles (éventuellement la totalité des ailerons peut être mobile) commandées de manière à modifier la portance de chacun et ainsi modifier l'inclinaison latérale et verticale du bout-dehors. C'est cette inclinaison, couplée à un choix d'allongement télescopique de la perche, qui permet de positionner exactement l'extrémité de la perche par rapport à un réceptacle prévu sur l'avion ravitaillé, pendant que l'avion ravitaillé suit de très près le ravitailleur à la même vitesse que ce dernier.

Dans la technique antérieure, le positionnement était manuel et fait par un opérateur placé à l'arrière de l'avion ravitailleur; l'opérateur manipule des manettes de commande et observe directement, à travers un hublot transparent, le résultat de ses manoeuvres jusqu'à obtenir un positionnement exact de l'extrémité de la perche en regard du réceptacle de l'avion ravitaillé.

La figure 4 représente schématiquement en coupe le réceptacle d'accouplement prévu pour recevoir la perche de ravitaillement. Le réceptacle 20 est disposé en affleurement avec les tôles 22 du fuselage de l'avion. Il comprend de préférence un logement d'entrée, avec des parois 24 de forme généralement conique ou pyramidale se rétrécissant vers l'intérieur, de manière que l'extrémité 26 de la perche 16 soit naturellement guidée, lorsqu'elle pénètre dans le logement, vers un fond de logement dans lequel se situe le dispositif d'accouplement proprement dit 28. Le guidage par les parois 24 est tel que l'extrémité de la perche s'enclenche naturellement dans le dispositif d'accouplement 28 dès lors qu'elle est en place devant le réceptacle et qu'une action de déploiement télescopique supplémentaire de quelques centimètres ou dizaines de centimètres est effectuée. Le dispositif d'accouplement permet de maintenir la perche en place pendant l'opération de transfert de carburant; ce dispositif est connecté, à l'intérieur de l'avion ravitaillé, par une conduite 30, à un réservoir de carburant non représenté.

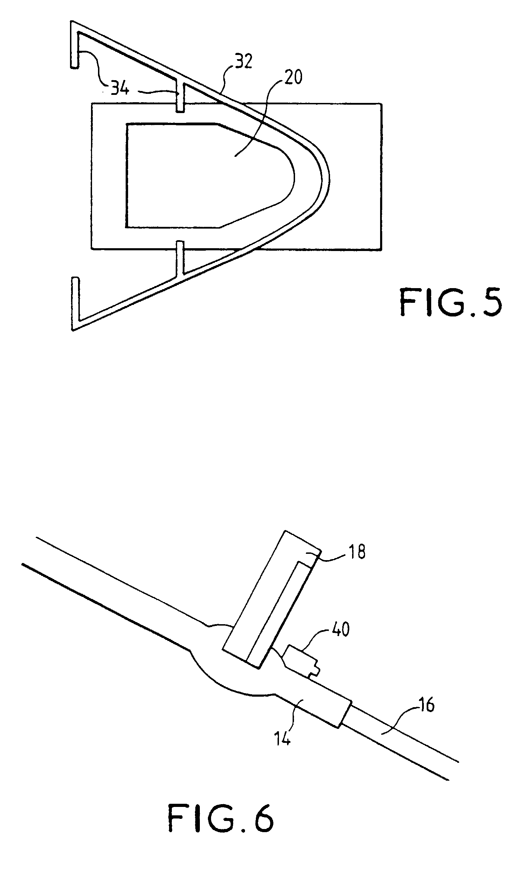

La figure 5 représente une vue de dessus du réceptacle 20 affleurant à la surface de l'avion. Pour faciliter la mise en place de l'extrémité de la perche par l'opérateur, la position exacte du réceptacle peut être soulignée par un marquage (peintures par exemple). L'opérateur agissant manuellement en vision directe peut s'aider de ce marquage pour vérifier que la perche est en bonne position avant de déployer un plus de perche, ce qui permettra le verrouillage de celle-ci dans le réceptacle. Dans l'exemple représenté, le marquage 32 est une forme généralement triangulaire entourant le réceptacle, avec des arêtes 34 qui s'étendent transversalement à l'axe de l'avion. Ce marquage n'est qu'un exemple.

La présente invention propose un système automatique de guidage, mais ne se substitue pas au guidage manuel, de manière qu'un avion ravitaillé puisse être accouplé indifféremment à un avion ravitailleur pourvu de moyens de guidage automatique ou à un avion ravitailleur dépourvu de moyens automatiques. C'est pourquoi l'invention utilise de préférence les mêmes marques que celles qui sont utilisées actuellement sur les avions ravitaillables existants.

Le guidage automatique utilise une reconnaissance de forme d'image, à partir de l'image fournie par une caméra (visible ou éventuellement infrarouge). Selon l'invention, comme le montre la figure 6, la caméra 40 est montée à l'extrémité du bout-dehors 14, par exemple derrière les ailerons 18. En principe une seule caméra suffit mais on verra qu'on peut également utiliser deux caméras, par exemple une de chaque côté du bout-dehors, ou une dessus et une dessous, ou encore deux caméras placées au dessus du bout-dehors, très proches l'une de l'autre puisqu'elles sont toutes deux sur le bout-dehors, mais l'une décalée à droite et l'autre décalée à gauche.

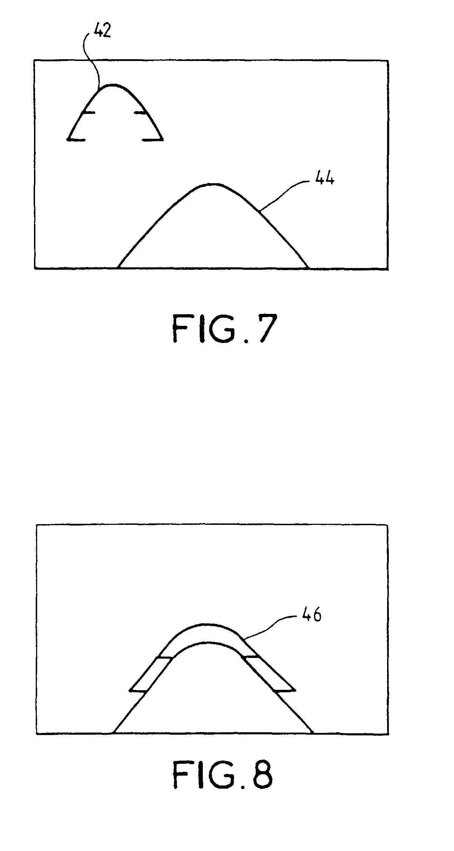

La figure 7 représente une image enregistrée par la caméra 40 au cours de l'approche de l'extrémité de la perche vers le réceptacle.

L'image 44 du tuyau 14 est très déformée puisque la ligne de visée de la caméra est pratiquement parallèle à la perche télescopique.

Du fait de la géométrie retenue pour le système, le projeté de la perche sur l'image est un trapèze qui couvre la partie inférieure de l'image. En choisissant une ligne de visée légèrement divergente par rapport à l'axe de la perche, on peut minimiser la surface de l'image couverte par la perche. L'autre conséquence de cette géométrie est que la hauteur du trapèze varie peu en fonction de la longueur de perche déployée, et cette information peut même servir pour estimer la longueur de perche déployée. Cette longueur peut être également obtenue par tout autre système (retour d'information des servomoteurs de déploiement, télémètre, etc.).

Le système est donc capable de connaître à chaque instant la forme exacte de la projection de la perche sur l'image.

L'image du réceptacle peut être soulignée par une marque de peinture contrastée qui permet de le repérer. Par simplicité, on considère que la marque peinte représente la position exacte du réceptacle, ce qui est le cas si elle entoure de près le réceptacle. Cependant, on comprendra que la marque de repère pourrait être située plus loin du réceptacle, le calcul de position devant alors tenir compte de l'écart entre cette marque et le réceptacle puisque le calcul de guidage se fait par rapport à la marque alors que l'opération de guidage consiste à s'approcher du réceptacle. Il peut être intéressant d'utiliser une marque espacée du réceptacle pour que l'image de la marque risque moins d'être occultée par la perche elle-même.

L'image 42 de la marque de peinture 32 est déformée par rapport à l'image horizontale de la figure 5 du fait de la vision oblique de la caméra (en principe le bout-dehors est incliné obliquement vers le bas, la caméra étant orientée parallèlement au bout-dehors, alors que le plan de la marque est généralement horizontal).

La figure 8 représente l'image finale 46 de la marque peinte telle que la caméra doit la voir au moment où la perche est prête pour un accouplement. Cette image finale 46 dépend bien entendu de la marque utilisée. L'image finale de la marque est à une position de référence bien déterminée dans l'image, et elle a une dimension bien déterminée. Mais attention, cette image finale, sa position de référence et sa dimension de référence ne sont pas absolues : elle dépendent de la longueur de perche déployée et de l'orientation du bout-dehors par rapport à l'horizontale. On comprend en effet par exemple que si une grande longueur de perche est déployée entre la caméra et le réceptacle, l'image de la marque peinte doit apparaître plus petite que si une courte longueur est déployée. De même, si le bout-dehors est plus incliné verticalement ou latéralement, la projection de la marque peinte sur le plan d'image ne sera pas la même que si l'inclinaison est moindre.

Les circuits de calcul ont pour fonction de comparer l'image détectée 42 et l'image de référence, et d'en déduire des commandes de guidage à appliquer aux ailerons du bout-dehors et des commandes de déploiement à appliquer aux servo-moteurs de la perche dans un sens tendant à faire coïncider l'image 42 de la marque de peinture avec l'image de référence correspondant à la position propice à l'accouplement.

On aura compris que la coïncidence implique que la position détectée du réceptacle et la taille des éléments caractéristiques correspondent à ceux de l'image de référence.

Sur les figures 7 et 8, on a représenté des images schématiques et non le paysage réellement enregistré par la caméra. Mais de toute façon, le positionnement de la caméra sur le bout-dehors permet de travailler sur des images simples car la proximité de la caméra par rapport à l'avion ravitaillé limite le nombre d'objets présents dans le champ de la caméra. Ceci permet de simplifier les opérations de reconnaissance de forme qui permettent l'asservissement entre une forme reconnue et une forme de référence.

Le traitement de signal numérique utilisé dans l'invention comporte donc au moins les étapes suivantes :
- filtrage des images issues de la caméra;
- extraction de caractéristiques (éléments ponctuels ou contours ou zones homogènes, etc,..);
- reconnaissance d'une forme de référence dans l'image;
- écartométrie de position dans le plan image de la forme détectée par rapport à la forme de référence;
- élaboration de signaux de déplacement du bout-dehors et de la perche dans un sens tendant à rapprocher la forme détectée de la forme de référence, en position et en dimensions,
- poursuite de l'écartométrie de position et la comparaison de dimensions si la coïncidence n'est pas atteinte, ou détection d'une coïncidence en position et dimensions
- autorisation d'accouplement en cas de détection de coïncidence.

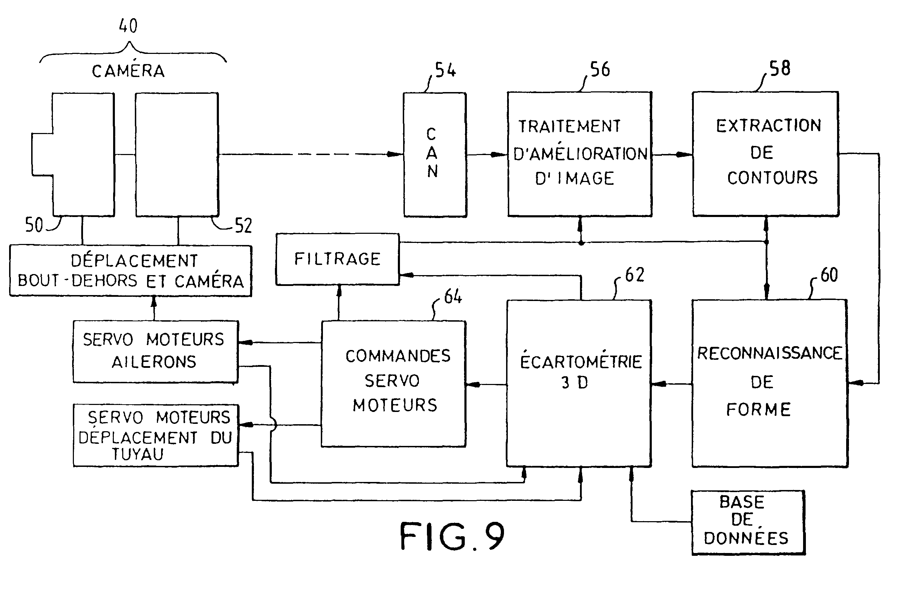

La figure 9 représente la constitution globale du système selon l'invention et on va détailler plus précisément les fonctions qui peuvent être mises en oeuvre pour obtenir un fonctionnement optimal de l'invention.

La caméra 40 comporte comme c'est toujours le cas une tête optique 50 et des circuits électroniques de commande 52 et de mise en forme de signaux électriques bruts.

Le signal vidéo fourni par la caméra est transmis jusqu'à l'avion ravitailleur et est exploité par un calculateur numérique. Les fonctions réalisées par ce calculateur ont été détaillées par commodité sous forme de blocs en cascade sur la figure 9.

Le calculateur reçoit les signaux de la caméra et les convertit en numérique dans un convertisseur analogique numérique 54 (sauf si le signal a déjà été numérisé à l'intérieur de la caméra). Les signaux d'image numérisés subissent alors les traitements suivants :

Un traitement d'amélioration de l'image numérique (bloc 56) permettant de travailler sur une image corrigée des défauts fixes ou périodiques issus de la caméra, et de réduire le bruit. Pour réaliser ces opérations de pré-traitement, une batterie d'opérateurs de corrections peut être utilisée en fonction de la qualité des images. On peut citer les corrections radiométriques et d'homogénéités qui visent à réduire les phénomènes de distorsions ou de dégradations des niveaux de gris, les corrections géométriques, le moyennage d'images (3 par 3 par exemple) ou les filtrages de Gauss ou filtrage médian pour réduire les bruits haute fréquence. On peut également soustraire aux images issues de la caméra une image de référence des défauts fixes (réduction des bruits basse fréquence).

Après ces filtrages numériques, les signaux sont traités dans un bloc de détection de contours permettant de remplacer l'image par des lignes de contour afin de faciliter ensuite la reconnaissance de formes attendues dans ces lignes; le circuit de détection de contour fonctionne à partir d'une mesure des contrastes : il ne retient que les zones de changement forts de contraste. Si la peinture de la marque spécifique entourant le réceptacle est suffisamment contrastée, on peut mettre par exemple un seuil de détection de contour tel que seul le contour de cette marque soit conservé dans l'image traitée.

Ce bloc peut être complété par une fonction de détection d'éléments ponctuels de l'image. Il s'agit là de détecter les angles des formes de l'image. La connaissance des angles présents dans l'image est une information qui permet d'améliorer ou d'accélérer le module de reconnaissance de formes. Deux méthodes classiques peuvent être citées à titre d'exemple pour réaliser cette fonction : la méthode de Moravek ou le calcul du Hessien. Une troisième fonction de détection des régions homogènes de l'image peut également être ajoutée. Cette dernière étape peut, par exemple, utiliser la méthode de Kohler. On prépare ainsi la phase de reconnaissance des formes en extrayant de l'image les informations utiles qu'elles contient : contours, angles, régions homogènes.

Les techniques de détection de contours sont maintenant des fonctions classiques en traitement d'image numérique et il n'est pas nécessaire d'entrer dans les détails de cette fonction. Les non spécialistes qui souhaiteraient acquérir quelques connaissances sur ce sujet peuvent par exemple se référer à l'article de R. Deriche "Using Cany's Criteria to Derive a Recursively Implemented Optimal Edge Detector", International Journal of Computer Vision, 1(2) : 167, 1987. Egalement, le livre de William K. Pratt "Digital Image Processing" édité par John Wiley and Sons, 1987 rappelle les éléments classiques de la détection de contour, ainsi d'ailleurs que ceux du traitement d'amélioration d'image préalable à cette détection. On peut également se référer au livre de R. Horaud et O. Monga "Vision par Ordinateur, Outils Fondamentaux" éditions Hermès, Paris 1995, qui traite d'une façon exhaustive le problème de détection de contours.

Le procédé préconisé ne dépend pas du choix de la méthode de détection de contours retenue.

L'étape de traitement suivante, effectuée dans le bloc 58, est une étape de chaînage des contours obtenus; en effet, la détection de contours fournit des points isolés, c'est-à-dire non reliés mathématiquement. Il faut donc réaliser le chaînage de ces points de contours, en intégrant des connaissances a priori sur les objets que l'on cherche à isoler (continuité du contour, taille ...) afin de limiter le nombre de contours de l'image qui ne présentent pas d'intérêt. Les contours retenus sont ensuite codés par des méthodes classiques telles que : code de chaîne, approximation polygonale, approximation polynomiale, descripteurs de Fourier.

Les non spécialistes peuvent également s'ils veulent acquérir des connaissances, se référer à la méthode de chaînage exposée par G. Giraudon "An efficient Edge Following Algorithm". Proceedings of the 5th Scandinavian Conference on Image Analysis", Stockholm, pages 547-554, 1987.

L'image traitée qui résulte de ces traitements se présente maintenant sous forme de vecteurs caractéristiques qui peuvent être stockés dans une mémoire et traités ultérieurement sous forme de vecteurs et non d'images point par point.

Le bloc de traitement suivant est un bloc 60 de reconnaissance de forme proprement dit permettant de reconnaître dans cet ensemble de vecteurs une image du réceptacle ou de son marquage associé. Ce bloc doit donc comparer l'image de contours vectorisés détectée par la caméra, éventuellement complétée par les angles et les régions homogènes, à un modèle théorique auquel devrait correspondre cette image à un moment donné.

Comme on ne sait pas où est situé l'image de la marque dans le champ de la caméra, et comme il faut de toutes façons déterminer la position de cette image si on la reconnaît, on utilise de préférence un principe de reconnaissance par translation de segments.

On rappelle le principe général, maintenant classique, de la reconnaissance par translation de segments : on recherche les translations individuelles qui permettent de superposer un segment du contour détecté avec un segment correspondant du modèle recherché ayant sensiblement la même orientation; comme le segment détecté et le segment du modèle n'ont pas forcément la même dimension (surtout au début de la phase de guidage), il y a de multiples translations possibles permettant d'amener le premier segment sur le deuxième. L'ensemble de ces translations possibles peut en fait être représenté par un "vecteur de translation". Si on recherche les vecteurs de translations, c'est-à-dire les ensembles de translations possibles, pour tous les segments du modèle qu'on cherche à reconnaître dans l'image, on obtient tout un ensemble de "segments de translations" qui sont d'autant plus regroupés qu'il y a bien dans l'image détectée un contour ressemblant au modèle. Ces vecteurs regroupés se coupent dans une zone qui, statistiquement, représente une translation globale la plus probable amenant un contour détecté sur un contour modèle. L'existence d'une telle translation probable constitue une reconnaissance de la présence de la forme recherchée dans l'image détectée. De plus, la translation la plus probable permet de définir l'écart en deux dimensions, dans l'image détectée, entre la position de la forme reconnue et la position théorique recherchée.

On applique ce principe de reconnaissance de forme aux contours présents dans l'image traitée par le bloc 58, et on compare ces contours à un modèle de référence. Le modèle de référence est issu d'une base de données qui comporte différentes images caractéristiques prédéterminées correspondant aux différentes marques susceptibles d'être peintes sur les avions à ravitailler.

Mais de plus, le modèle de référence n'est pas fixe : il évolue au cours du temps en fonction de l'orientation du bout-dehors et de la longueur de perche déployée. Le bloc de reconnaissance de forme doit donc prendre en compte à tout moment ces informations d'orientation et de longueur. Le modèle de référence pour une orientation de perche et une longueur donnée est l'image des éléments caractéristiques que voit la caméra lorsque l'extrémité de la perche, pour cette longueur et cette orientation de bout-dehors, est en regard du réceptacle et prête pour l'enclenchement de l'accouplement.

Ce modèle de référence comprend une forme de référence et une position relative de référence. Les informations de reconnaissance de forme permettent alors d'établir dans un bloc d'écartométrie 62 une écartométrie à deux dimensions représentant l'écart de position dans le plan de l'image entre le contour reconnu et le modèle de référence.

Le bloc d'écartométrie 62 quantifie ces écarts de position et utilise par ailleurs des informations de rapport de dimensions entre le contour reconnu et le modèle de référence pour en déduire un écart selon l'axe de profondeur.

Les signaux d'écartométrie ainsi produits sont utilisés dans un bloc 64 de commande des servo-moteurs. Ce bloc comporte essentiellement un calculateur qui élabore la réponse des servocommandes de pilotage du bout-dehors en fonction d'une loi de guidage. Cette loi de guidage prend en compte les écarts détectés pour orienter le bout-dehors à droite, à gauche, en haut ou en bas, et pour piloter le déploiement de la perche de manière à rapprocher itérativement la forme détectée du modèle théorique correspondant à la position actuelle du bout-dehors et au déploiement actuel de la perche. La loi de commande prend en compte l'état des gouvernes et des servo-moteurs. Elle est basée sur le caractéristiques mécaniques et élastiques de l'ensemble bout-dehors/perche, ainsi que sur la mécanique du vol des gouvernes.

Les signaux de commande issus du bloc 64 sont appliqués aux servomoteurs d'orientation des volets des ailerons 18 du bout-dehors 14, ainsi qu'aux servo-moteurs de déploiement de la perche télescopique. Ils permettent de réaliser, par itérations successives, la jonction entre l'extrémité de la perche et le réceptacle de l'avion ravitaillé.

On prévoit de préférence que le système fonctionne en deux phases : une phase d'acquisition dans laquelle les opérations de prétraitement, d'extraction de contours et la reconnaissance de formes sont effectuées dans toute l'image, puis une phase de poursuite pour les images suivantes où ces opérations ne sont effectuées que dans une fenêtre de travail plus restreinte. La taille et le positionnement de cette fenêtre dans l'image sont déterminés selon le processus suivant :

Dans l'image n, on calcule les paramètres caractéristiques liés au réceptacle (notamment position dans l'image et taille) par les opérations successives décrites ci-avant. On en déduit la réponse des servo-moteurs des gouvernes du bout-dehors et du déploiement de la perche. Par un filtrage de Kalman, on estime la position et la taille des éléments caractéristiques à l'instant suivant dans l'image n+1. En prenant une marge pour tenir compte d'éventuelles turbulences, d'éventuelles actions des pilotes sur les gouvernes des avions ou des erreurs de modélisation, on en déduit le positionnement et la taille de la fenêtre de travail dans l'image n+1.

En réduisant la taille de la fenêtre de travail, on accélère le temps de calcul et donc la fréquence de travail de notre système. Le fait de travailler sur des fenêtres plus petites permet également d'utiliser d'autres techniques de reconnaissance, telles que la reconnaissance par corrélation dont la précision est meilleure que le pixel.

Cette technique de poursuite des éléments caractéristiques de l'image permet également d'anticiper les cas où ces éléments ne sont plus détectables, soit parce qu'ils sont masqués par un autre objet de la scène (la perche par exemple), soit parce qu'ils sont sortis du champ de la caméra, soit encore parce qu'ils ne se situent pas dans la fenêtre de travail. Dans ce cas là, le suivi des positions successives dans l'image des éléments caractéristiques aux instants précédents permet d'établir une stratégie optimale de réacquisition de ces éléments.

Lorsque la position finale désirée a été atteinte, le calculateur peut enclencher l'accouplement automatiquement, en ordonnant un déploiement supplémentaire de quelques centimètres ou dizaines de centimètres permettant le verrouillage de la perche dans le réceptacle, ou alors il peut fournir seulement un signal d'autorisation, l'enclenchement étant effectué par un opérateur qui contrôle que tout est en ordre. On notera que l'image élaborée par la caméra peut être transmise dans le poste de pilotage de l'avion ravitailleur et que les opérations sont alors contrôlées à partir du poste de pilotage et non d'un poste spécifique situé à l'arrière de l'avion.

Cette invention permet d'utiliser une caméra de constitution simple, sensible dans les spectre visible ou infrarouge. Pour les ravitaillements de nuit ou par mauvaise visibilité, l'utilisation d'une source d'éclairement peut être nécessaire.

Bien que l'invention permette d'utiliser une seule caméra, elle n'exclut pas qu'on prévoie deux caméras pour des raisons de redondance, ou pour limiter les cas de perte des éléments caractéristiques au cours de la poursuite (par masquage de la perche par exemple). Dans ce cas, si la marque cesse d'être reconnue par le calculateur du fait qu'elle est masquée en tout ou partie par la perche, la deuxième caméra, légèrement décalée, prend automatiquement le relais et continue à assurer l'asservissement. Le système peut être également complété par une caméra portée par l'avion ravitailleur qui permet à l'opérateur d'avoir une vue globale de la scène du ravitaillement pour pouvoir assurer le contrôle du fonctionnement de l'asserrvissement.

## Revendications

1. Système d'accouplement, notamment pour le ravitaillement en vol, utilisant des moyens de guidage automatique de l'extrémité d'une perche télescopique (16) vers un réceptacle d'accouplement (20) en vue de l'accouplement de la perche et de ce réceptacle, la perche étant déployable à partir d'une extrémité d'un bout-dehors (14) orientable, système caractérisé en ce qu'il comporte :
- une caméra (40) portée par l'extrémité du bout-dehors (14) et fournissant une image sous forme de signal électronique,
- des moyens de reconnaissance de forme (56, 58, 60) couplés à la caméra pour reconnaître, dans l'image (42) fournie par la caméra, des éléments caractéristiques (32, 34) liés au réceptacle,
- des moyens de calcul de position pour déterminer, par calcul dans l'image (42) fournie par la caméra, l'écart entre la position des éléments caractéristiques de l'image à un instant donné, et une position de référence issue d'une image mémorisée de la perche et du réceptacle lorsque leur accouplement est réalisé,
- des moyens (62) pour déduire de la taille réelle du réceptacle, de la taille et de la position de sa projection dans l'image, l'écart en profondeur entre l'extrémité de la perche et réceptacle,
- et des moyens pour commander l'orientation du bout-dehors et le déploiement de la perche en fonction des écarts ainsi déterminés, de manière à rapprocher itérativement la perche du réceptacle jusqu'à l'annulation de ces écarts.

2. Système d'accouplement selon la revendication 1, caractérisé en ce que la position de référence est une position des éléments caractéristiques, dans l'image fournie par la caméra, lorsque la perche est en position finale permettant un accouplement au réceptacle.

3. Système selon la revendication 2, caractérisé en ce que les moyens de reconnaissance de forme comprennent une base de données contenant des images caractéristiques prédéterminées correspondant à différents réceptacles et marquages caractéristiques d'avions susceptibles d'être ravitaillés.

4. Système selon la revendication 3, caractérisé en ce que les moyens de reconnaissance de forme comportent des moyens pour définir une position de référence variable au cours du temps, à partir de l'image prédéterminée, de l'orientation actuelle du bout-dehors, et de la longueur actuelle de perche déployée.

## Patentansprüche

1. Koppelsystem, insbesondere für die Betankung eines Flugzeugs im Flug unter Verwendung von Mitteln zur automatischen Annäherung des Endes eines Teleskoprüssels (16) an ein zur Kopplung bereites Empfangsorgan (20), um den Rüssel mit dem Empfangsorgan zu koppeln, wobei der Rüssel von einem Ende eines orientierbaren Auslegers (14) ausgehend ausgefahren werden kann, dadurch gekennzeichnet, daß es enthält:
- eine Kamera (40), die am Ende des Auslegers (14) montiert ist und ein Bild in Form von elektronischen Signalen liefert,
- Mittel (56, 58, 60) zur Formerkennung, die an die Kamera gekoppelt sind und in dem von der Kamera gelieferten Bild (42) charakteristische Elemente (32, 34) bezüglich des Empfangsorgans erkennen,
- Mittel zur Lageberechnung, um durch Berechnung im von der Kamera gelieferten Bild (42) den Abstand zwischen der Lage der charakteristischen Elemente des Bilds in einem gegebenen Zeitpunkt und einer Referenzlage zu berechnen, die von einem gespeicherten Bild des Rüssels und des Empfangsorgans stammt, wenn ihre Kopplung durchgeführt wird,
- Mittel (62), um aus der tatsächlichen Größe des Empfangsorgans, der Größe und der Lage seiner Projektion im Bild den Abstand zwischen dem Ende des Rüssels und dem Empfangsorgan in Tiefenrichtung abzuleiten,
- und Mittel zur Steuerung der Ausrichtung des Auslegers und der Ausfahrlänge des Rüssels abhängig von den so bestimmten Abständen derart, daß der Rüssel iterativ dem Empfangsorgan angenähert wird, bis dieser Abstand zu null wird.

2. Koppelsystem nach Anspruch 1, dadurch gekennzeichnet, daß die Referenzlage eine Lage der charakteristischen Elemente in dem von der Kamera gelieferten Bild ist, wenn der Rüssel sich in der Endposition befindet, in der eine Kopplung an das Empfangsorgan möglich ist.

3. System nach Anspruch 2, dadurch gekennzeichnet, daß die Formerfassungsmittel eine Datenbasis aufweisen, die charakteristische vorbestimmte Bilder entsprechend verschiedenen Empfangsorganen und charakteristischen Markierungen von Flugzeugen enthält, die betankt werden sollen.

4. System nach Anspruch 3, dadurch gekennzeichnet, daß die Formerkennungsmittel Mittel zur Definition einer zeitlich variablen Referenzlage ausgehend vom vorbestimmten Bild, von der aktuellen Ausrichtung des Auslegers und der aktuellen Länge des ausgefahrenen Rüssels enthalten.

## Claims

1. Coupling system, particularly for in-flight refuelling, using means for automatically guiding the end of a telescopic line (16) towards a coupling receptacle (20) with a view to coupling the line and this receptacle, the line being deployable from one end of an orientable boom (14), the system being characterized in that it comprises:
- a camera (40) borne by the end of the boom (14) and providing an image in the form of an electronic signal,
- shape-recognition means (56, 58, 60) coupled to the camera for recognizing, in the image (42) provided by the camera, characteristic elements (32, 34) associated with the receptacle,
- position-calculation means for determining, by calculation in the image (42) provided by the camera, the difference between the position of the characteristic elements of the image at a given instant and a reference position originating from an image, stored in memory, of the line and of the receptacle when they are coupled,
- means (62) for deducing from the actual size of the receptacle, from the size and from the position of its projection in the image, the depth-wise distance between the end of the line and receptacle,
- and means for controlling the orientation of the boom and deploying the line on the basis of the differences thus determined, so that the line is brought closer to the receptacle by iteration until these differences have been cancelled.

2. Coupling system according to Claim 1, characterized in that the reference position is a position of the characteristic elements, in the image provided by the camera, when the line is in the final position that allows coupling to the receptacle.

3. System according to Claim 2, characterized in that the shape-recognition means comprise a database containing predetermined characteristic images corresponding to various receptacles and characteristic markings on the aircraft likely to be refuelled.

4. System according to Claim 3, characterized in that the shape-recognition means comprise means for defining a reference position that can vary over time, starting from the predetermined image, of the current orientation of the boom and of the current length of the deployed line.
